# EUROPEAN PATENT SPECIFICATION

(11) **EP 2 530 206 B1**
(45) Date of publication and mention of the grant of the patent: **04.07.2018**
(21) Application number: 11736754.0
(22) Date of filing: 20.01.2011
(51) Int. Cl.: E02F 9/00, H01M 10/44, H02J 7/04

(54) **CHARGING SYSTEM FOR OPERATION MACHINE**
LADESYSTEM FÜR BETRIEBSMASCHINE
SYSTÈME DE CHARGE POUR ENGIN DE CHANTIER

(30) Priority: 29.01.2010 JP 2010017804
(43) Date of publication of application: 05.12.2012
(73) Proprietor: Takeuchi Mfg, Co., Ltd, Hanishina-gun Nagano 389-0605 (JP)
(72) Inventor: KUMEUCHI, Kengo, Hanishina-gun Nagano 389-0605 (JP); YAMADA, Hiroyuki, Hanishina-gun Nagano 389-0605 (JP)
(74) Representative: Patentwerk B.V.
(86) International application number: PCT/JP2011/000276
(87) International publication number: WO 2011/093037

(56) References cited:
- EP-A1- 2 080 659
- JP-A- 2002 125 326
- JP-A- 2003 143 770
- JP-A- 2008 069 516
- JP-A- 2009 194 958
- JP-A- 2009 254 097
- US-A1- 2002 070 710

## Description

The present invention relates to a charging system for an operation machine, such as a construction machine or the like, that employs an electric motor as its supply of power.

For the most part, the power supply for a construction machine is typically an engine; however, in recent years, in consideration of the environment, there have been proposed construction machines of an electrically driven type, that have an electric motor as the power supply (see Patent Document 1, for example). This type of construction machine is outfitted with a battery for supplying electrical power to the electric motor, and is furnished with a control device for controlling operations of the various electrical components, such as the electric motor. In such electrically driven construction machines, the duration for which the machine may be operated is determined by the chargeable capacity of the battery, and accordingly there is typically adopted a configuration outfitted with a battery having capacity sufficient for operation for one day, so that charging of the battery may be performed between the end of operations on one day and the start of operations the following day.

Prior art includes Japanese Laid-open Patent Publication No. 2004-225355(A). However EP-A- 2 080 659 discloses a charging system for an electrically driven vehicle, provided with an electric motor, a battery for supplying electrical power to the electric motor, the charging system comprising a charger for charging the battery by using electrical power supplied from outside, a charging control section for controlling operation of the charger and a thermometer for measuring the temperature of the battery.

As will be appreciated from the foregoing, it is presumed that charging of the battery will be performed principally at night. However, in cases in which, for example, a lithium ion battery is employed as the battery, charging cannot be performed when the battery temperature is low (-2°C or below). In response, it would be conceivable to employ a heater to warm the battery, or to employ insulation or the like to keep the battery warm. However, this results in an increased number of parts and higher costs, and in cases where a heater is employed for warming, necessitates extra power.

The present invention was developed in view of the problems described above, and an object of the present invention is to afford a charging system for an operation machine, whereby it is possible to initiate charging within a predetermined time frame, even at low temperatures. The invention is defined by independent claims 1 and 4.

The present invention provides a charging system of the kind referred to above in which the vehicle is an operation machine comprising further a hydraulic pump for discharging hydraulic oil, a hydraulic actuator driven by the hydraulic oil discharged from the hydraulic pump, an operation device for performing a predetermined operation by using operation of the hydraulic actuator, wherein the charging system comprises an internal clock, the charging control section is adapted to control operation of the charger, so that, in a case in which operation of the electric motor is at a stop, when the internal clock indicates that time is outside of a predetermined time frame, charging of the battery is performed to radiate heat until the temperature of the battery exceeds the predetermined temperature when the temperature of the battery is equal to or less than the predetermined temperature, and charging of the battery is stopped when the temperature of the battery exceeds a predetermined temperature, and when the internal clock indicates that time is within the predetermined time frame, charging of the battery is performed until the battery is charged.

In the invention recited above, in preferred practice, the system has a heat-conducting section (for example, the blower device 65 taught in the embodiment) for directing to the battery the heat generated from the hydraulic oil by operation of the hydraulic pump or of the hydraulic actuator; and when operation of the electric motor is at a stop, the heat-conducting section directs the heat generated from the hydraulic oil to the battery.

In the invention taught above, in preferred practice, the predetermined time frame is a time frame in which the pricing of the electrical power supplied from the outside is cheaper than in other time frames.

In the invention taught above, in preferred practice, the battery is a lithium ion battery.

### ADVANTAGEOUS EFFECTS OF THE INVENTION

According to the present invention, the charging control section controls operation of the charger so that, in a case in which operation of the electric motor is at a stop outside of a predetermined time frame, charging of the battery is stopped when the temperature of the battery exceeds a predetermined temperature, when the temperature of the battery is equal to or less than the predetermined temperature, charging of the battery is performed, and the battery is caused to radiate heat. Therefore, upon reaching the predetermined time frame, even at a low temperature, for example, an atmospheric temperature of below -10°C, charging of the battery can be initiated in a state in which the battery temperature exceeds the predetermined temperature, making it possible to initiate charging within the predetermined time frame, even at low temperatures.

In the invention taught above, in preferred practice, the system has a heat-conducting section for directing to the battery the heat generated from the hydraulic oil by operation of the hydraulic pump or of the hydraulic actuator. In so doing, a drop in battery temperature can be prevented without performing charging, and the heat generated from the hydraulic oil can be utilized effectively, reducing the number of times charging takes place at low temperature.

Further, in the invention taught above, in preferred practice, the predetermined time frame is a time frame in which the pricing of the electrical power supplied from the outside is cheaper than in other time frames. In so doing, the cost of charging the battery can be reduced.

Further, in the invention taught above, in preferred practice, the battery is a lithium ion battery. In so doing, the effects obtained by the invention taught above can be obtained effectively.

### BRIEF DESCRIPTION OF THE DRAWINGS

FIG. 1 is a block diagram showing a hydraulic circuit and an electrical circuit of a power shovel;
FIG. 2 is a perspective view of a power shovel;
FIG. 3 is a side view (partly sectional view) of a swivel;
FIG. 4 is a timing chart showing an example of control of a charger; and
FIG. 5 is a placement diagram of a blower device and an auxiliary blower device.

### DESCRIPTION OF THE EMBODIMENTS

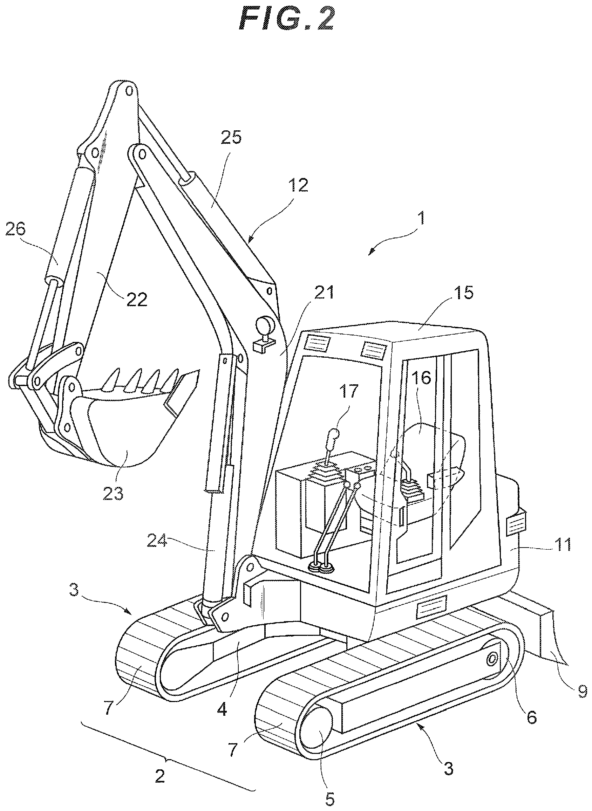

The preferred embodiment of the present invention is described below, making reference to the drawings. A power shovel 1 according to the present embodiment is shown in FIG. 2. The power shovel 1 is constituted by provision of a travel device 2 furnished with travel mechanisms 3, 3 at left and right sides of a travel platform 4 (vehicle body) describing an "H" shape in plan view; a blade 9 furnished in vertically swiveling fashion at the back section of the travel platform 4; a revolving stage 11 furnished revolvably on the top section of the travel platform 4; a shovel mechanism 12 furnished to the front section of the revolving stage 11; and an operator cabin 15 (vehicle body) erected on the top section of the revolving stage 11, for an operator to ride in.

The pair of left and right travel mechanisms 3, 3 constituting the travel device 2 are constituted by drive sprocket wheels 5 furnished to the left and right front sections of the travel platform 4, idler wheels 6 furnished to the left and right rear sections of the travel platform 4, and crawler tracks 7 engaged thereabout. Rotation of the drive sprocket wheels 5 is driven, for example, by a travel motor (not shown) comprising a hydraulic motor. The blade 9 is swiveled through operation of a hydraulically driven blade cylinder (not shown). The revolving stage 11 is caused to revolve, for example, by a revolution motor (not shown) comprising a hydraulic motor.

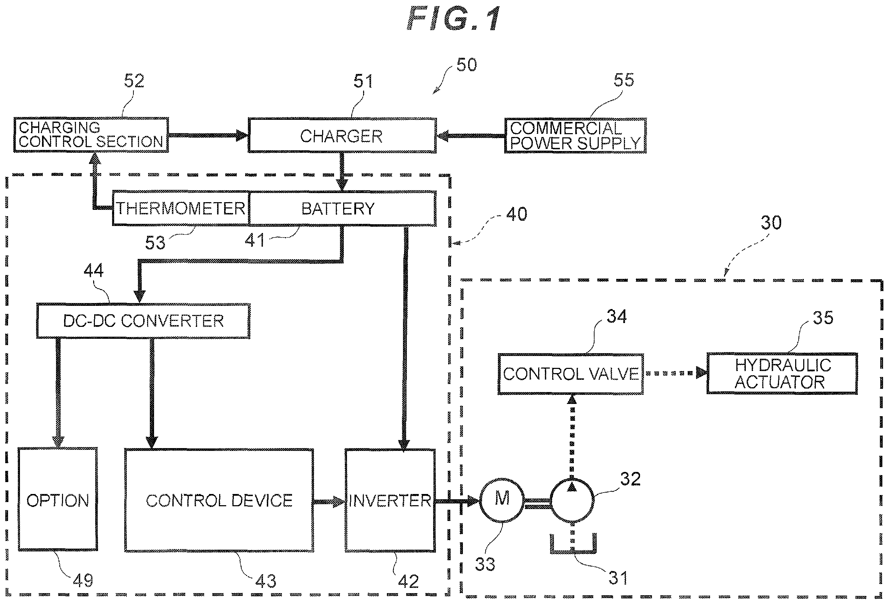

The shovel mechanism 12 is constituted by a boom 21 pivotably linked in lifting and lowering fashion to the front section of the revolving stage 11, an arm 22 pivotably linked to the distal end section of the boom 21 in vertically swiveling fashion within the plane of lifting or lowering of the boom 21, a bucket 23 pivotably linked in vertically swiveling fashion to the distal end of the arm 22, a hydraulically driven boom cylinder 24, an arm cylinder 25, and a bucket cylinder 26. The boom 21 is lifted and lowered by the boom cylinder 24, the arm 22 is swiveled by the arm cylinder 25, and the bucket 23 is swiveled by the bucket cylinder 26. In the following description, these cylinders 24 to 26, as well as the aforementioned blade cylinder (not shown), travel motor (not shown), and rotation motor (not shown), are sometimes referred to collectively as hydraulic actuators 35 (see FIG. 1). The operator cabin 15 is formed to a rectangular box shape enclosed on all sides, and is furnished in the interior thereof with an operator seat 16 in which the operator sits, and an operating device 17 for operating the travel device 2 and the shovel mechanism 12.

Further, as shown in FIG. 1, the power shovel 1 is furnished with a hydraulic unit 30 operated by supply of hydraulic oil to the hydraulic actuators 35, a power supply system 40 for supplying electrical power to the electric motor of the hydraulic unit 30, a charging system 50 for performing charging, and so forth. In FIG. 1, the electrical circuit is shown by a solid-line arrow, and the hydraulic circuit is shown by a broken-line arrow. The hydraulic unit 30 has a tank 31 for storing the hydraulic oil, a hydraulic pump 32 for discharging the hydraulic oil from the tank 31 at a predetermined oil pressure and a predetermined flow rate, a pump-driving electric motor 33 for driving the hydraulic pump 32, and a control valve 34 for controlling the hydraulic oil discharged from the hydraulic pump 32 and supplied to the hydraulic actuators 35, in a supply direction and at a supply rate according to operation of the operating device 17. The pump-driving electric motor 33 is electrically connected to the power supply system 40, and is designed to operate utilizing electrical power supplied by the power supply system 40.

The power supply system 40 has a storage-capable battery 41 for supplying DC electrical power, an inverter 42 for converting the DC electrical power supplied from the battery 41 to AC electrical power for output to the pump-driving electric motor 33, a control device 43 for controlling operation of the inverter 42, and a DC-DC converter 44 for converting DC voltage of the battery 41 to a predetermined voltage, and outputting the electrical power to the control device 43. The DC electrical power supplied from the battery 41 is also supplied, via the DC-DC converter 44, to options 49 such as the headlamps and so forth. The battery 41 is, for example, a lithium ion battery, and is designed so that it can be charged by the charging system 50 of the present embodiment, utilizing electrical power supplied from an outside commercial power supply 55.

The charging system 50 has a charger 51 that, utilizing electrical power supplied from the external commercial power supply 55, charges the battery 41; a charging control section 52 for controlling the operation of the charger 51; and a thermometer 53 for measuring the temperature of the battery 41. The charger 51 has a power supply cord (not shown) electrically connectable to the commercial power supply 55, and when electrically connected by plugging a plug (not shown) furnished to the distal end of the power supply cord into a receptacle or connector (not shown) of the commercial power supply 55, performs charging of the battery 41. The charging control section 52 has an internal clock (not shown), and is electrically connected to the charger 51 and the thermometer 53. The thermometer 53 is mounted on the battery 41, and is adapted to measure the temperature of the battery 41 and output a measurement signal thereof to the charging control section 52.

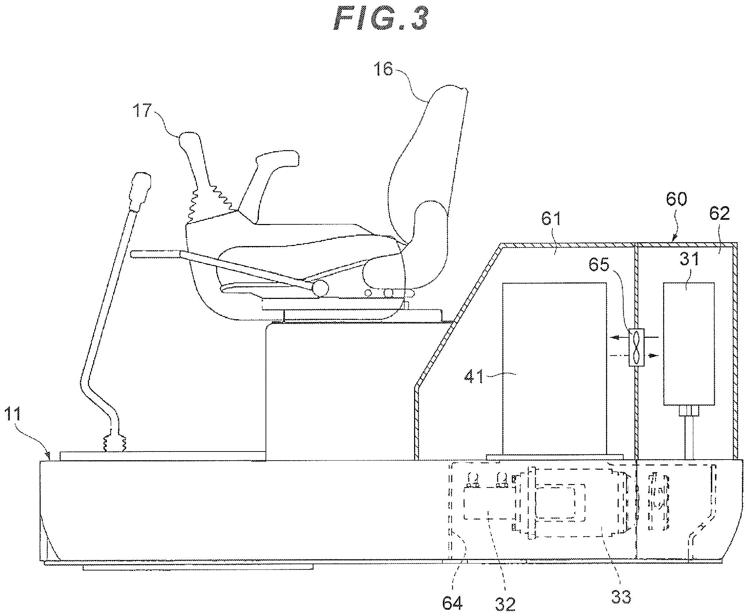

As shown in FIG. 3, the battery 41 is stored in the interior of a bonnet 60 that is furnished in the rear section of the revolving stage 11. In the interior of the bonnet 60 are furnished a battery storage section 61 for storing the battery 41, and, adjacent to the battery storage section 61, a tank storage section 62 for storing the tank 31 of the hydraulic unit 30; as well as a blower device 65 situated between the battery storage section 61 and the tank storage section 62. The blower device 65 is not depicted in detail, but is constituted by a blower fan, fan motor, or the like, and is adapted, for example, to blow air inside the tank storage section 62 into the battery storage section 61 during forward rotation of the blower fan, and to blow air inside the battery storage section 61 into the tank storage section 62 during reverse rotation of the blower fan. Below the battery storage section 61 and the tank storage section 62, there is furnished a motor storage section 64 or the like for storing the hydraulic pump 32 and the pump-driving electric motor 33 of the hydraulic unit 30.

In the power shovel 1 constituted in the above manner, when an operator seated in the operator seat 16 operates the operating device 17, the hydraulic oil discharged from the hydraulic pump 32 is supplied to the hydraulic actuator 35 in a supply direction and at a supply rate according to operation of the operation device 17, through supply control of the control valve 34. At this time, for example, an excavation operation or the like is performed by the shovel mechanism 12 by operating the boom cylinder 24, the arm cylinder 25, and the bucket cylinder 26. The blade 9 is swiveled by operating the blade cylinder (not shown), the travel device 2 travels by means of operation of the travel motor (not shown), and the revolving stage 11 is revolved by operating the revolution motor (not shown). At this time, the pump-driving electric motor 33 which drives the hydraulic pump 32 is operated by utilizing electrical power supplied from the battery 41 via the inverter 42.

Once the excavation or other operation by the power shovel 1 is finished, the operator operates an operation key (not shown) or the like, placing the power shovel 1 in a state of stopped operation. At this time, operation of the pump-driving electric motor 33, and so forth, comes to a stop. In this way, between the end of operations on one day and the start of operations on the following day, charging of the battery 41 by the charging system 50 of the present embodiment is performed, for example, utilizing electrical power during the late night time frame ("late night electrical power"), when the rate for electrical power from the commercial power supply 55 is cheaper than in other time frames. At this time, the power supply cord (not shown), which is stored in a predetermined storage space, is withdrawn and electrically connected to the commercial power supply 55. A charge switch (not shown) is then operated to the ON position, to perform charging of the battery 41 utilzing the charger 51.

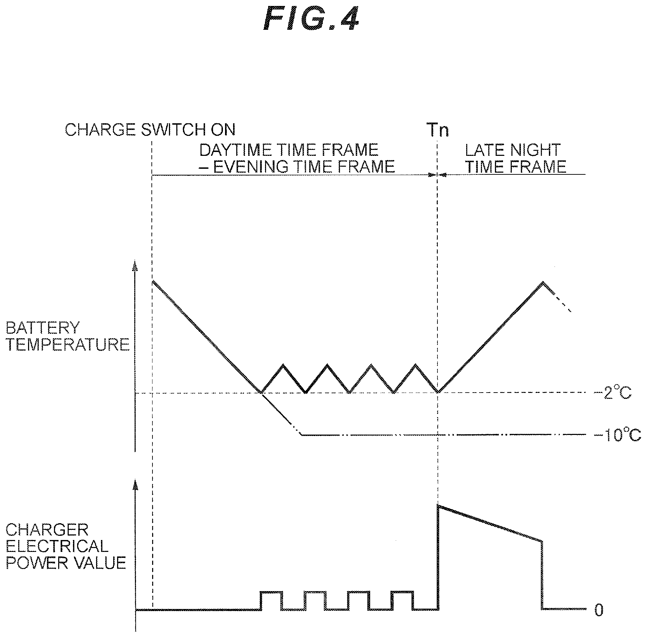

Herein, charging control by the charging control section 52 is described while making reference to the timing chart shown in FIG. 4. With the power shovel 1 in a state of stopped operation as discussed above, when the charger 51 is electrically connected to the commercial power supply 55 and the charge switch (not shown) is operated to the ON position, in a case in which the charging control section 52 has determined from the time indicated by the internal clock (not shown) that the current time falls within the late night time frame (for example, a time frame from 11 PM to 7 AM), it outputs a drive signal to the charger 51 and controls operation of the charger 51 so as to perform charging of the battery 41. On the other hand, in a case in which the charging control section 52 has determined from the time indicated by the internal clock (not shown) that the current time is outside of the late night time frame (i.e., in the daytime time frame or evening time frame in FIG. 4), as shown in FIG. 4, until the late night time frame is reached, it outputs a stop signal to the charger 51 to halt charging of the battery 41; and once the late night time frame is reached (for example, the start time Tn of the late night time frame), outputs a drive signal to the charger 51, and controls operation of the charger 51 so as to start charging the battery 41.

While charging of the battery 41 is at a stop as discussed above, in a case in which, for example, the atmospheric temperature is -10°C, once the temperature of the battery 41 drops and reaches -10°C to equal the atmospheric temperature (refer to the double-dash and dotted line in FIG. 4), because a lithium ion battery is being used as the battery 41, charging can no longer be performed. In contrast to this, according to the present embodiment, a measurement signal is inputted to the charging control section 52 from the thermometer 53 of the battery 41, and in a case in which the charging control section 52 has determined from the time indicated by the internal clock (not shown) that the current time does not fall within the late night time frame, when the temperature of the battery 41 exceeds a predetermined temperature (for example, -2°C, which is the lower limit at which charging of a lithium ion battery is possible), it then outputs a stop signal to the charger 51 in the manner discussed previously, and controls operation of the charger 51 so as to stop charging of the battery 41. On the other hand, when the temperature of the battery 41 is equal to or less than the predetermined temperature (-2°C), the charging control section 52 outputs a drive signal to the charger 51, and controls the operation of the charger 51 so as to perform charging of the battery 41, causing the battery 41 to radiate heat until the temperature of the battery 41 exceeds the predetermined temperature (-2°C). In so doing, when the late night time frame is reached, even when the atmospheric temperature is low, for example, below -10°C, charging of the battery 41 can start with the temperature of the battery 41 in a state exceeding the predetermined temperature (-2°C). Once charging of the battery 41 has started, when the amount of charge of the battery 41 has exceeded a predetermined value, the charging control section 52 outputs a stop signal to the charger 51 and finishes charging the battery 41.

In preferred practice, with charging of the battery 41 at a stop as discussed above, the charging control section 52 controls the operation of the blower device 65 to bring about forward rotation of the blower fan of the blower device 65 and blow the air inside the tank storage section 62 into the battery storage section 61, as shown by the solid-line arrow in FIG. 3. In so doing, heat generated from the hydraulic oil by operation of the hydraulic pump 32 or the hydraulic actuator 35 during operation of the power shovel 1 can be directed from the tank 31 to the battery 41, therefore, without performing charging, the battery 41 can be prevented from dropping in temperature, and the heat generated from the hydraulic oil can be effectively utilized to reduce the number of times charging takes place at low temperature. During operation of the power shovel 1 (the pump-driving electric motor 33), in order to prevent a rise in temperature of the battery 41, the operation of the blower device 65 may be controlled so as to switch the blower fan of the blower device 65 into reverse rotation and blow the air inside the battery storage section 61 into the tank storage section 62, as shown by the single-dot and dash line arrow in FIG. 3. In so doing, the temperature around the battery 41 can be maintained at an optimal level.

As described above, according to the present embodiment, in a case in which operation of the power shovel 1 (the pump-driving electric motor 33) has been stopped at a time outside the late night time frame, the charging control section 52 controls the operation of the charger 51 such that, when the temperature of the battery 41 exceeds a predetermined temperature (for example, -2°C), charging of the battery 41 is stopped, or when the temperature of the battery 41 is equal to or less than the predetermined temperature (-2°C), the battery 41 is charged and the battery 41 is caused to radiate heat. Therefore, when the late night time frame is reached, even when the atmospheric temperature is low, for example, below -10°C, charging of the battery 41 can be started in a state with the temperature of the battery 41 exceeding the predetermined temperature (-2°C), making it possible to start charging during the late night time frame, even at low temperatures. Moreover, by employing a lithium ion battery as the battery 41, particularly great advantageous effects can be obtained.

The time frame for starting charging is preferably the late night time frame, when the rate for electrical power supplied by the outside commercial power supply 55 is lower than in other time frames. In so doing, the cost of charging the battery 41 can be reduced.

Moreover, in preferred practice, the system has the blower device 65, which directs to the battery 41 the heat generated from the hydraulic oil by operation of the hydraulic pump 32 or of the hydraulic actuator 35. In so doing, a drop in temperature of the battery 41 can be prevented without performing charging, and the heat generated from the hydraulic oil can be utilized effectively, reducing the number of times charging takes place at low temperature.

In the embodiment discussed above, a lithium ion battery is employed as the battery 41; however, there is no limitation thereto; an organic radical cell or other rechargeable cell, for example, could be employed as well.

In the embodiment discussed above, the time frame for starting charging is a late night time frame, when the rate for electrical power is cheaper than in other time frames. However, there is no limitation thereto; any predetermined time frame set by the user as needed would be acceptable as well.

Moreover, whereas in the embodiment discussed above, the charging control section 52 controls the operation of the charger 51 in such a way that when the temperature of the battery 41 reaches -2°C or below the battery 41 is charged and the battery 41 is made to radiate heat, there is no limitation thereto; in a case in which, for example, a lithium ion battery is employed as the battery 41, the predetermined temperature may be any temperature (close to the lower limit) at which charging of the battery 41 is possible, such as -1°C.

In the embodiment discussed above, the charger 51 utilizes electrical power supplied by the outside commercial power supply 55 to charge the battery 41. However, there is no limitation thereto; electrical power supplied, for example, by a generator could be utilized as well.

Whereas in the embodiment discussed above, charging of the battery 41 in the late night time frame is started by ON operation of a charge switch (not shown), it would be acceptable to furnish, for example, a quick charge switch separate from the charge switch, to provide additional functionality whereby, in the case of ON operation of the quick charge switch, charging starts without awaiting the late night time frame.

In the embodiment discussed above, the blower device 65 is utilized to direct the heat generated from the hydraulic oil from the tank 31 to the battery 41; however, there is no limitation thereto, and it would be acceptable, for example, to instead furnish a shutter member, formed of a heat insulating material or the like, between the battery storage section 61 and the tank storage section 62, and to open the shutter member in cases in which operation of the power shovel 1 (the pump-driving electric motor 33) has been stopped outside of the late night time frame, and direct the heat generated from the hydraulic oil from the tank 31 to the battery 41.

In the embodiment discussed above, the charging control section 52 may be furnished independently as shown in FIG. 1, or incorporated into the control device 43 of the power supply system 40.

Moreover, whereas in the embodiment discussed above, an example of an electrically driven power shovel 1 was described, there is no limitation thereto; it is possible to implement the charging system of the present embodiment in any electrically driven operation machine furnished with a battery, for example, electrically driven operation machines for elevated locations, moving cranes, forklifts, and the like.

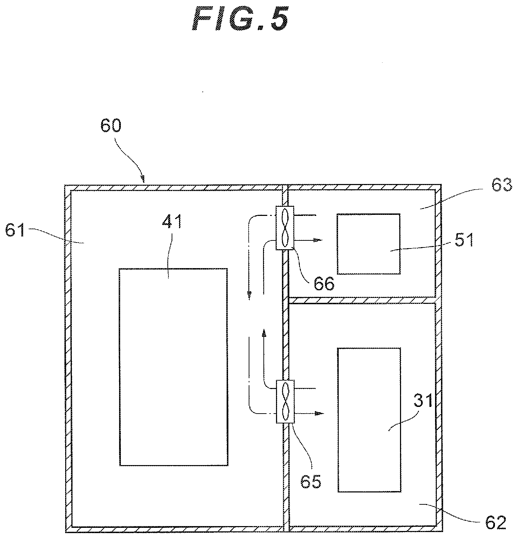

Moreover, in the embodiment discussed above, it would be acceptable to furnish, in addition to the blower device 65, an auxiliary blower device 66 situated between the charger storage section 63 and the battery storage section 61 which are furnished in the interior of the bonnet 60, as shown in FIG. 5. The charger storage section 63 stores the charger 51 adjacently to the battery storage section 61. While the auxiliary blower device 66 is not depicted in detail, it is constituted by a blower fan, fan motor, or the like, and is adapted, for example, to blow air inside the battery storage section 61 into the charger storage section 63 during forward rotation of the blower fan, and to blow air inside the charger storage section 63 into the battery storage section 61 during reverse rotation of the blower fan. Where the auxiliary blower device 66 is combined with the blower device 65, the effect of heating and cooling the battery 41 can be enhanced further.

Here, an example of control of operation of the blower device 65 and the auxiliary blower device 66 will be described. With the power shovel 1 in a state of stopped operation, when the charger 51 is electrically connected to the commercial power supply 55 and the charge switch (not shown) is operated to the ON position, in a case in which the temperature of the battery 41 is equal to or less than a predetermined set temperature, the charging control section 52 controls the operation of the blower device 65 to bring about forward rotation of the blower fan of the blower device 65 so that the air inside the tank storage section 62 is blown into the battery storage section 61, as well as controlling the operation of the auxiliary blower device 66 to bring about forward rotation of the blower fan of the auxiliary blower device 66 so that the air inside the battery storage section 61 is blown into the charger storage section 63, as shown by the solid-line arrow in FIG. 5. In so doing, the battery 41 can be warmed effectively. Then, when the charger 51 starts to charge the battery 41, the charging control section 52 controls the operation of the blower device 65 to bring about reverse rotation of the blower fan of the blower device 65 so that the air inside the battery storage section 61 is blown into the tank storage section 62, as well as controlling the operation of the auxiliary blower device 66 to bring about reverse rotation of the blower fan of the auxiliary blower device 66 so that the air inside the charger storage section 63 is blown into the battery storage section 61, as shown by the single-dot and dash line arrow in FIG. 5. This is because the battery 41 radiates heat and warms up during charging.

On the other hand, in a case in which the temperature of the battery 41 exceeds a predetermined set temperature, the charging control section 52 controls the operation of the blower device 65 to bring about reverse rotation of the blower fan of the blower device 65 so that the air inside the battery storage section 61 is blown into the tank storage section 62, as well as controlling the operation of the auxiliary blower device 66 to bring about reverse rotation of the blower fan of the auxiliary blower device 66 so that the air inside the charger storage section 63 is blown into the battery storage section 61. In so doing, the battery 41 can be cooled effectively. Then, when the charger 51 starts to charge the battery 41, the charging control section 52 continues with a similar control. This is because the battery 41 radiates heat and warms up during charging. The predetermined temperature is preferably set to the temperature of the battery 41 expected according to the heat radiated when charging is performed (for example, the temperature when the battery 41 is 20% charged).

### EXPLANATION OF NUMERALS AND CHARACTERS

- 1:: power shovel
- 2:: travel device
- 9:: blade
- 11:: revolving stage
- 12:: shovel mechanism
- 30:: hydraulic unit
- 32:: hydraulic pump
- 33:: pump-driving electric motor
- 35:: hydraulic actuator
- 40:: power supply system
- 41:: battery
- 50:: charging system
- 51:: charger
- 52:: charging control section
- 53:: thermometer
- 55:: commercial power supply
- 65:: blower device

## Claims

1. A charging system (50) for an electrically driven vehicle (1), provided with an electric motor (33), a battery (41) for supplying electrical power to the electric motor,
the charging system (50) comprising:
a charger (51) for charging the battery (41) by using electrical power supplied from outside;
a charging control section (52) for controlling operation of the charger (50); and
a thermometer (53) for measuring the temperature of the battery (41);
**characterized in that** the vehicle is an operation machine (1) comprises further a hydraulic pump (32) for discharging hydraulic oil, a hydraulic actuator (35) driven by the hydraulic oil discharged from the hydraulic pump (32), an operation device (12) for performing a predetermined operation by using operation of the hydraulic actuator (35),
that the charging system comprises an internal clock; and
that the charging control section (52) is adapted to control operation of the charger (51) so that,
- in a case in which operation of the electric motor (33) is at a stop
- when the internal clock indicates that time is outside of a predetermined time frame ,
- charging of the battery is performed to radiate heat until the temperature of the battery exceeds the predetermined temperature when the temperature of the battery is equal to or less than the predetermined temperature, and
- charging of the battery (41) is stopped when the temperature of the battery exceeds a predetermined temperature, and
- when the internal clock indicates that time is within the predetermined time frame, charging of the battery (41) is performed until the battery is charged.

2. The charging system (50) according to claim 1, comprising a heat-conducting section for directing to the battery (41) the heat generated from the hydraulic oil by operation of the hydraulic pump (32) or of the hydraulic actuator (35), wherein when operation of the electric motor (33) is at a stop, the heat-conducting section directs the heat generated from the hydraulic oil to the battery (41).

3. The charging system (50) according to claim 1, wherein the battery (41) is a lithium ion battery.

4. Electrically driven vehicle (1), comprising a charging system (50) as claimed in any of the preceding claims.

## Patentansprüche

1. Ladesystem (50) für ein elektrisch angetriebenes Fahrzeug (1), das mit einem Elektromotor (33), einer Batterie (41) zum Zuführen von elektrischem Strom an den Elektromotor bereitgestellt ist,
wobei das Ladesystem (50) Folgendes enthält:
eine Ladeeinrichtung (51) zum Laden der Batterie (41) durch Verwenden von elektrischem Strom, der von außen zugeführt wird;
einen Ladesteuerungsabschnitt (52) zum Steuern des Betriebs der Ladeeinrichtung (50); und
ein Thermometer (53) zum Messen der Temperatur der Batterie (41);
**dadurch gekennzeichnet, dass** das Fahrzeug eine Arbeitsmaschine (1) ist, der ferner Folgendes enthält:
eine Hydraulikpumpe (32) zum Ablassen von Hydrauliköl, einen Hydraulikaktuator (35), der von dem Hydrauliköl, das von der Hydraulikpumpe (32) abgelassen wird, angetrieben wird, eine Arbeitsvorrichtung (12) zum Durchführen eines vorbestimmten Vorgangs durch Verwendung des Vorgangs des Hydraulikaktuators (35),
dass das Ladesystem eine interne Uhr umfasst; und
dass der Ladesteuerungsabschnitt (52) dazu angepasst ist, den Betrieb der Ladeeinrichtung (51) zu steuern, sodass
- in einem Fall, in dem der Betrieb des Elektromotors (33) im Stillstand ist,
- wenn die interne Uhr anzeigt, dass die Zeit außerhalb eines vorbestimmten Zeitrahmens ist,
- das Laden der Batterie durchgeführt wird, um Wärme abzustrahlen, bis die Temperatur der Batterie die vorbestimmte Temperatur überschreitet, wenn die Temperatur der Batterie gleich oder kleiner als die vorbestimmte Temperatur ist, und
- das Laden der Batterie (41) angehalten wird, wenn die Temperatur der Batterie eine vorbestimmte Temperatur überschreitet, und
- wenn die interne Uhr anzeigt, dass die Zeit innerhalb des vorbestimmten Zeitrahmens liegt, das Laden der Batterie (41) durchgeführt wird, bis die Batterie geladen ist.

2. Ladesystem (50) nach Anspruch 1, mit einen wärmeleitenden Abschnitt zum Leiten der von dem hydraulischen Öl erzeugten Wärme an die Batterie (41) durch Betreiben der hydraulischen Pumpe (32) oder des Hydraulikaktuators (35), wobei, wenn der Betrieb des Elektromotors (33) im Stillstand ist, der wärmeleitende Abschnitt die von dem hydraulischen Öl erzeugte Wärme an die Batterie (41) leitet.

3. Ladesystem (50) nach Anspruch 1, wobei die Batterie (41) eine Lithium-Ionen-Batterie ist.

4. Elektrisch angetriebenes Fahrzeug (1), dass ein Ladesystem (50) nach einem der vorstehenden Ansprüche enthält.

## Revendications

1. Système de charge (50) pour un véhicule électrique (1), comprenant un moteur électrique (33), une batterie (41) pour fournir de l'énergie électrique au moteur électrique,
le système de charge (50) comprenant :
un chargeur (51) pour charger la batterie (41) en utilisant de l'énergie électrique fournie de l'extérieur ;
une section de contrôle de charge (52) pour contrôler le fonctionnement du chargeur (50) ; et
un thermomètre (53) pour mesurer la température de la batterie (41) ;
**caractérisé en ce que** le véhicule est un engin de chantier (1) comprend en outre une pompe hydraulique (32) pour refouler de l'huile hydraulique, un actionneur hydraulique (35) entraîné par l'huile hydraulique refoulée depuis la pompe hydraulique (32), un dispositif de chantier (12) pour effectuer une opération prédéterminée en utilisant le fonctionnement de l'actionneur hydraulique (35),
**en ce que** le système de charge comprend une horloge interne ; et
**en ce que** la section de contrôle de charge (52) est adaptée pour contrôler le fonctionnement du chargeur (51) de telle sorte que,
- dans un cas dans lequel le fonctionnement du moteur électrique (33) est à l'arrêt
- quand l'horloge interne indique que l'heure est à l'extérieur d'un intervalle de temps prédéterminé,
- la charge de la batterie est effectuée pour rayonner la chaleur jusqu'à ce que la température de la batterie dépasse la température prédéterminée quand la température de la batterie est égale ou inférieure à la température prédéterminée, et
- la charge de la batterie (41) est interrompue quand la température de la batterie dépasse une température prédéterminée, et
- quand l'horloge interne indique que l'heure est à l'intérieur de l'intervalle de temps prédéterminé, la charge de la batterie (41) est effectuée jusqu'à ce que la batterie soit chargée.

2. Système de charge (50) selon la revendication 1, comprenant une section conduisant la chaleur pour diriger jusqu'à la batterie (41) la chaleur générée depuis l'huile hydraulique par le fonctionnement de la pompe hydraulique (32) ou de l'actionneur hydraulique (35), dans lequel quand le fonctionnement du moteur électrique (33) est à l'arrêt, la section conduisant la chaleur dirige la chaleur générée depuis l'huile hydraulique jusqu'à la batterie (41).

3. Système de charge (50) selon la revendication 1, dans lequel la batterie (41) est une batterie au lithium-ion.

4. Véhicule électrique (1), comprenant un système de charge (50) selon l'une quelconque des revendications précédentes.
